# EUROPEAN PATENT APPLICATION

(11) **EP 4 819 653 A1**
(43) Date of publication of application: **07.10.2026**
(21) Application number: 25167296.0
(22) Date of filing: 31.03.2025
(51) Int. Cl.: H04W 4/80, G06Q 10/0836, G07C 9/00, H04W 12/06, A47G 29/14

(54) **AN AUXILIARY DEVICE FOR WIRELESS COMMUNICATION WITH A PARCEL LOCKER DEVICE AND A METHOD THEREOF**

(71) Applicant: SwipBox Development ApS, 6400 Sønderborg (DK)
(72) Inventor: Pedersen, Jonas E., 7430 Ikast (DK); Rahman, Dergham Abdul, 6440 Augustenborg (DK); Erler, Klaus Okkels, 6470 Sydals (DK)
(74) Representative: Patrade A/S

(57) **Abstract**

An auxiliary device (100) configured to be paired with a parcel locker device (20) through a wireless connection comprising a user interface (102) configured to interact with a user (101), a processor (104), a short-range communication module (106) comprising a short-range antenna for communication with the parcel locker device (20), a long-range communication module (108) comprising a long-range communication antenna, for communication with a server (30).

## Description

### Field of the Invention

The present invention relates to methods and systems for communication between a parcel locker device and a separate, auxiliary device. More specifically, the methods and systems use wireless communication protocols between the parcel locker device and the auxiliary device, and between the parcel locker device and a server.

### Background of the Invention

Parcel lockers are well known systems for reducing travel costs for distribution of parcels. The parcel lockers are placed at various locations such as at petrol stations, inside stores, parking lots or the like. Customers and couriers interact with the parcel lockers for collection and delivery of parcels.

A type of parcel lockers that is becoming increasingly popular is a parcel locker which can only be interacted with and operated by users exclusively through a suitable third-party device, typically a mobile phone with an ad-hoc mobile application. However, access to an ad-hoc mobile application is not always possible nor desirable, and therefore, some people may find it impossible or excessively difficult to access this type of parcel lockers. Furthermore, communication between a parcel locker and a mobile application may be prone to cyberattacks and therefore be unsafe for users of the parcel locker.

Therefore, there is a need for a solution to improve accessibility to parcel lockers whilst maintaining safe communication between a parcel locker and a user of the parcel locker.

### Object of the Invention

It is an object of the present invention to provide a method for establishing a wireless communication between a parcel locker device and an auxiliary device, so that the auxiliary device can be operated by a user to interact with the parcel locker device.

It is an object of the present invention to provide an auxiliary device for wireless communication with a parcel locker device, such that a user can, by operating the auxiliary device, interact with the parcel locker device.

### Summary of the Invention

According to a first aspect of the invention, there is provided a method for establishing a wireless communication connection between an auxiliary device and a parcel locker device, wherein the method comprises the steps of: establishing a long-range communication channel between the auxiliary device and a server; positioning the auxiliary device within a distance from the parcel locker device, the distance being such that the auxiliary device is able to communicate with the parcel locker device through a short-range communication channel; transmitting, from the auxiliary device, an auxiliary device authentication request message to the server, the auxiliary device authentication request message comprising a request to implement a server-auxiliary device authentication process; receiving, at the auxiliary device, an auxiliary device authentication request response message from the server, the authentication request response message indicating that the server-auxiliary device authentication process has been successfully completed; transmitting, from the auxiliary device, a parcel locker device authentication request message to the parcel locker device, the parcel locker device authentication request message comprising a request to implement a parcel locker-auxiliary device authentication process; receiving, at the auxiliary device, a parcel locker device authentication request response message from the parcel locker device, the parcel locker device authentication request response message indicating that the parcel locker-auxiliary device authentication process has been successfully completed, and wherein, after the server-auxiliary device authentication process and the parcel locker-auxiliary device authentication process have been successfully completed, a user interface of the auxiliary device is authorised to communicate with the parcel locker device, through a user interface of the auxiliary device.

The first aspect of the invention provides a method for wireless communication between a parcel locker device and another device, i.e., an auxiliary device. In this way, the parcel locker device can communicate with the auxiliary device, which may provide additional services and functionalities which the parcel locker device does not necessarily provide on its own. The auxiliary device may be used as an intermediary device, which enables the parcel locker device to communicate with a third-party device, and/or with a third party. The auxiliary device may coordinate communication between the parcel locker device and a third party and/or third-party device.

Advantageously, the auxiliary device may be operated by a user (e.g., a customer, a courier, the installer of the auxiliary device, or the like), to interact with the parcel locker device in a variety of ways. The auxiliary device can represent alternative means for a user to interact with the parcel locker device. For example, the user interface may be, for some users and/or in some circumstances, the most convenient or the only way to communicate with the parcel locker device effectively. In some circumstances, the auxiliary device is the device that enables the user to send/receive commands and/or notifications to the parcel locker device. In some circumstances, the user may use the user interface as an alternative means to send/receive commands and/or notifications to the parcel locker device (e.g., to open a door to collect a parcel, or to update a status of a parcel locker compartment from available to unavailable and vice versa). Therefore, the presence of the auxiliary device and of the user interface can significantly increase the chances that a user can interact effectively with the parcel locker device.

The auxiliary device communicates wirelessly with the parcel locker device, through the short-range communication channel. This provides for a more flexible and cheaper method of communication between the parcel locker device and the auxiliary device, because there is no need for hard-wired devices and for wire-based communication protocols. There is also no need for the auxiliary device to be secured to the parcel locker device, as long as it is positioned at a distance which enables effective short-range communication between the auxiliary device and the parcel locker device.

The method provides for the establishment of a long-range communication channel between the auxiliary device and a server. In this way, the auxiliary device can be controlled and/or monitored by a server. Thus, the auxiliary device can communicate with both the parcel locker device and the server through separate wireless channels. Advantageously, this means that the auxiliary device can function as an intermediary device for communication between the parcel locker device and a server. Furthermore, by being in communication with the auxiliary device, the server can monitor the auxiliary device performance and safety remotely. Even in this case, no hard-wired communication is required.

Before the parcel locker device is allowed to interact and/or exchange messages with the auxiliary device, the server and the auxiliary device engage in a server-auxiliary device authentication process. In this way, the server can verify the identity of the auxiliary device, before the auxiliary device is paired with, and starts communicating with the parcel locker device. In this way, security is enhanced and the chance of the parcel locker device pairing with and communicating with a nefarious actor, impersonating the auxiliary device is minimised. This may be particularly important, because the parcel locker device communicates with the auxiliary device through a wireless short-range communication channel, which may be prone to cyberattacks. Another advantage is that the server can identify a specific auxiliary device of, for example, a plurality of auxiliary devices. This is advantageous when the server routinely communicates with multiple auxiliary devices.

In some examples, the server-auxiliary device authentication process can be used by the auxiliary device to verify the identity of the server, and more specifically verify that the server that has established the connection with the auxiliary device is not a nefarious actor, impersonating the server of a reputable company. The server-auxiliary device authentication process can be used by both the server and the auxiliary device to authenticate each other. Similarly, the auxiliary device can identify a specific server of a plurality of nearby servers.

After the server-auxiliary device authentication process is completed, the auxiliary device and the parcel locker device engage in a parcel locker-auxiliary device authentication process. In this way, the parcel locker device can verify the identity of the auxiliary device, and/or the auxiliary device can verify the identity of the parcel locker device before the two devices engage in any further communication. In this way, security is enhanced and the chance of the parcel locker device or the auxiliary device pairing with a nefarious actor, impersonating, respectively, the auxiliary device or the parcel locker device, is minimised. Another advantage is that the auxiliary device can identify a specific parcel locker device of, for example, a plurality of parcel locker devices. This is advantageous when the auxiliary device routinely communicates with multiple parcel locker devices.

The double authentication process (i.e., the combination of the server-auxiliary device authentication process and of the parcel locker device-auxiliary device authentication process) provides for safe and effective communication between the auxiliary device and the parcel locker device, and between the auxiliary device and the server. This process can be used to verify that the auxiliary device and/or the server and/or the parcel locker device is/are legitimate. The double-authentication process can be used to verify compliance of the different parties (server, parcel locker device and/or auxiliary device) with local and/or national regulations.

A user interface of the auxiliary device is authorised to communicate with the parcel locker device, through a user interface of the auxiliary device, only after the server-auxiliary device authentication process and the parcel locker-auxiliary device authentication process have been successfully completed. An authentication process between two devices is successfully completed when both devices successfully identify the opposite device as a safe, authorised device to interact and communicate with. Advantageously, a user would not be able to interact with the auxiliary device, unless the auxiliary device has gone through the double authentication process described above. The user can therefore be ensured that the chances of them sharing sensitive information, such as personal details, payment card details or the like, is significantly reduced.

The double authentication process described above may be implemented by an installer during installation of the auxiliary device on a site where one or more parcel locker devices are located. In some embodiments, the double authentication process described above may be implemented periodically, as means to periodically check that the communication between the server, the parcel locker device and the auxiliary device is secure and operates correctly.

According to some embodiments, the method further comprises the step of receiving, at the auxiliary device, a request from a third party. In some examples, the method further comprises the step of generating, at a processor of the auxiliary device, a prompt message based on the received request, the prompt message comprising a prompt for the parcel locker device to implement an action. In some examples, the method further comprises the step of transmitting, from the auxiliary device, through the short-range communication channel, the prompt message to the parcel locker device, such that the parcel locker device executes the action. In this way, the third party can interact with the auxiliary device, and, through the auxiliary device, cause the parcel locker to implement an action. Advantageously, the third party can cause (or prompt) the parcel locker device to implement an action that, without the auxiliary device acting as an intermediary device, would not be possible to implement at the parcel locker device. Another advantage is that the third party can cause (prompt) the parcel locker device to implement an action that, without the auxiliary device acting as an intermediary device, would not be conveniently and/or easily implementable by the parcel locker. In this way, user accessibility to the parcel locker is improved. Another advantage is that the prompt is transmitted through wireless short-range communication and is therefore not relying on hard-wired devices and wired communication protocols.

In some examples, the method further comprises the step of receiving, at the auxiliary device, an action update message from the parcel locker device, wherein the action update message comprises an indication that the parcel locker device has executed the action. In this way, the auxiliary device can receive an update on whether the parcel locker device has implemented the action that has been requested, through the prompt, by the third party. In some examples, the method further comprises the step of transmitting, from the auxiliary device, the action update message to the third party. In this way, the third party can be updated regarding whether the action that they have requested has been (successfully) implemented by the parcel locker device.

In some examples, the third party may be a user. A user may be, for example, a customer which needs to collect a parcel from the parcel locker. Another example of user is a courier who needs to deliver a parcel in the parcel locker. In some examples, the request is received at the user interface, and the action update message is transmitted to the user through the user interface. In this way, the user can receive an update regarding the completion of an action which they have requested the parcel locker to implement through the same device (i.e., the user interface) through which they submitted the request. In other alternative embodiments, the user receives the action update message through an alternative device, different from the user interface (e.g., a mobile phone app, an email, an SMS, or the like).

In some examples, the third party is the server. In this way, the server can interact with the parcel locker device and request an action to be implemented by the parcel locker device. In some examples, the action update message is transmitted to the server through the long-range communication channel. Advantageously, the parcel locker device can implement one or more actions upon request of a remote server, and not only upon request of a party who is in proximity of the parcel locker device.

According to another aspect of the invention, there is provided an auxiliary device configured to be paired with a parcel locker device, through a wireless connection. The auxiliary device may comprise a user interface configured to interact with a user, a processor, a short-range communication module comprising a short-range antenna for communication with the parcel locker device, a long-range communication module comprising a long-range communication antenna, for communication with a server.

In some embodiments, the auxiliary device further comprises a battery unit. In some examples, the battery unit may be a replaceable battery unit.

In some embodiments, the user interface comprises a Point of Sale (PoS) device, such as a PIN pad, or the like. In this way, a user can process card payments through the user interface, for example by swiping a payment card at the PoS device. Advantageously, this can provide the user with a way to pay for a parcel which is alternative to a mobile application.

In some examples, the auxiliary device further comprises a display unit, wherein a state of the display unit is configured to either be an active state or a standby state. The state of the display unit may be configured to change from the standby state to the active state in response to a user input inputted to the user interface by a user. The state of the display unit may be configured to change from the active state to the standby state after no user input is received at the user interface for a predetermined period of time. In this way, the auxiliary device can minimise energy consumption and energy waste. For example, by being in standby mode, the display unit minimises energy consumption when nobody is interacting with said display.

According to another aspect of the invention, there is provided a parcel delivery system for distribution of parcels, the system comprising: an auxiliary device according to any of the embodiments described above; a parcel locker device, wherein the parcel locker device comprises one or more parcel lockers, each parcel locker comprising: one or more locker compartments, wherein each of the one or more locker compartments comprises a door and a lock unit, such that access to each of the one or more locker compartments is controlled via the respective door and lock unit; a locker short-range communication module configured to communicate with the auxiliary device through a wireless communication protocol.

According to some aspects, the parcel delivery system is configured to implement any of the method steps described in this application.

According to another aspect of the invention, there is provided a method for establishing a wireless communication connection between an auxiliary device and a parcel locker device, wherein the method comprises the steps of: positioning the auxiliary device within a distance from the parcel locker device, the distance being such that the auxiliary device is able to communicate with the parcel locker device through a short-range communication channel; receiving, at the parcel locker device, a parcel locker device authentication request message from the auxiliary device, the parcel locker device authentication request message comprising a request to implement a parcel locker-auxiliary device authentication process; transmitting, from the parcel locker device, a parcel locker device authentication request response message to the auxiliary device, the parcel locker device authentication request response message indicating that the parcel locker-auxiliary device authentication process has been successfully completed; and wherein after the parcel-locker auxiliary device authentication process has been successfully completed, and subject to a server-auxiliary device authentication process between the auxiliary device and a server has been successfully completed, the parcel locker device is authorised to communicate with a user interface of the auxiliary device, through the short-range communication channel.

**In** some embodiments, the method described in the paragraph above may further provide steps similar to the steps described with regards to the first method described in the summary section of this application.

According to another aspect of the invention, there is provided a method for establishing a wireless communication connection between an auxiliary device and a parcel locker device, wherein the method comprises the steps of: establishing, a long-range communication channel between the auxiliary device and a server, receiving, at a server, an auxiliary device authentication request message from the server, the auxiliary device authentication request message comprising a request to implement a server-auxiliary device authentication process, transmitting, from the server, an auxiliary device authentication request response message to the auxiliary device, the authentication request response message indicating that the server-auxiliary device authentication process has been successfully completed, and wherein after the server-auxiliary device authentication process has been successfully completed, and subject to a short-range communication channel being established between the auxiliary device and the parcel locker device, and subject to a parcel locker device-auxiliary device authentication process being successfully completed, the parcel locker device is then authorised to communicate with a user interface of the auxiliary device through the short-range communication channel.

In some embodiments, the method described in the paragraph above may further provide steps similar to the steps described with regards to the first method described in the summary section of this application.

According to another aspect of the invention, there is provided a method for establishing a wireless communication connection between an auxiliary device and a parcel locker device, wherein the method comprises the steps of establishing a long-range communication channel between the auxiliary device and a server, positioning the auxiliary device within a distance from the parcel locker device, the distance being such that the auxiliary device is able to communicate with the parcel locker device through a short-range communication channel, receiving, at the auxiliary device, an auxiliary device authentication request message from the server, the auxiliary device authentication request message comprising a request to implement a server-auxiliary device authentication process, transmitting, from the auxiliary device, an auxiliary device authentication request response message to the server, the authentication request response message indicating that the server-auxiliary device authentication process has been successfully completed, transmitting, from the auxiliary device, a parcel locker device authentication request message to the parcel locker device, the parcel locker device authentication request message comprising a request to implement a parcel locker-auxiliary device authentication process, receiving, at the auxiliary device, a parcel locker device authentication request response message from the parcel locker device, the parcel locker device authentication request response message indicating that the parcel locker-auxiliary device authentication process has been successfully completed, and wherein after the server-auxiliary device authentication process and the parcel locker-auxiliary device authentication process have been successfully completed, a user interface of the auxiliary device is authorised to communicate with the parcel locker device, through a user interface of the auxiliary device.

According to some aspects of the invention, the methods described in this application are computer-implemented methods. According to some aspects of the invention, there is provided a computer-readable medium which is configured to implement all the steps of any method described in this application.

### Brief Description of Figures

**Figure 1** is a schematic overview of a system comprising an auxiliary device, a server and a parcel locker device, wherein the auxiliary device is connected through wireless communication to the server and to the parcel locker device through, respectively, a long-range communication channel and a short-range communication channel;
**Figure 2** is another example of auxiliary device, in which the auxiliary device is positioned between two parcel lockers, each parcel locker comprising a plurality of parcel locker compartments;
**Figure 3** is a message flow diagram of a method for wireless communication between the auxiliary device, the server and the parcel locker as illustrated in Figure 1. In this example, the parcel locker device is authorised to communicate with a user interface of the auxiliary device;
**Figure 4** is a message flow diagram of another example method for wireless communication between the auxiliary device, the server and the parcel locker as illustrated in Figure 1, and for communication of a prompt to open a parcel locker compartment of the parcel locker device, sent from a user;
**Figure 5** is a message flow diagram of another example method for wireless communication between the auxiliary device, the server and the parcel locker as illustrated in Figure 1, and for communication of a prompt to update the status of a locker compartment of the parcel locker device, sent from a server;
**Figure 6** is a block diagram illustrating a method for providing wireless communication between an auxiliary device and a parcel locker device;
**Figure 7** is a block diagram illustrating another method for providing wireless communication between an auxiliary device and a parcel locker device; and
**Figure 8** is a block diagram illustrating a computer system architecture in accordance with exemplary embodiments.

### Detailed Description

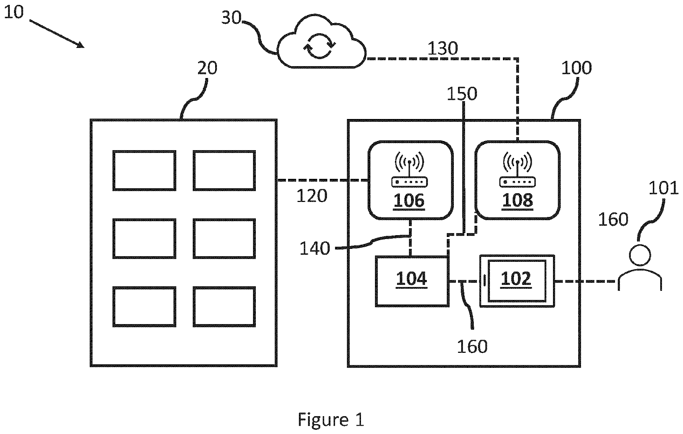

Figure 1 illustrates a system 10, the system comprising an auxiliary device 100, a parcel locker device 10 and a server 20. The auxiliary device 100 comprises a user interface 102. A user 101 can interact with the auxiliary device 100 and/or with the parcel locker device through the user interface 102.

The auxiliary device comprises a short-range antenna 106. The short-range antenna is configured to enable short-range communication between the parcel locker device 20 and the auxiliary device 100. The short-range communication occurs through a short-range communication protocol through a short-range communication channel 120.

The auxiliary device comprises a long-range antenna 108. The long-range antenna is configured to enable long-range communication between the auxiliary device 100 and the server 20. The long-range communication occurs through a long-range communication protocol through a long-range communication channel 130.

The auxiliary device 100 further comprises a processor 104. The processor 104 is configured to control operations of the user interface 102, the short-range antenna 104 and the long-range antenna 108. The processor 104 controls operations of the user interface 102 through a connector 160. The processor 104 controls operations of the long-range antenna 108 through a connector 150. The processor 104 controls operations of the short-range antenna 106 through a connector 140. The connectors 140, 150 and 160 may be wire-based connectors, wireless connectors, or any other conventional and commercially available connectors.

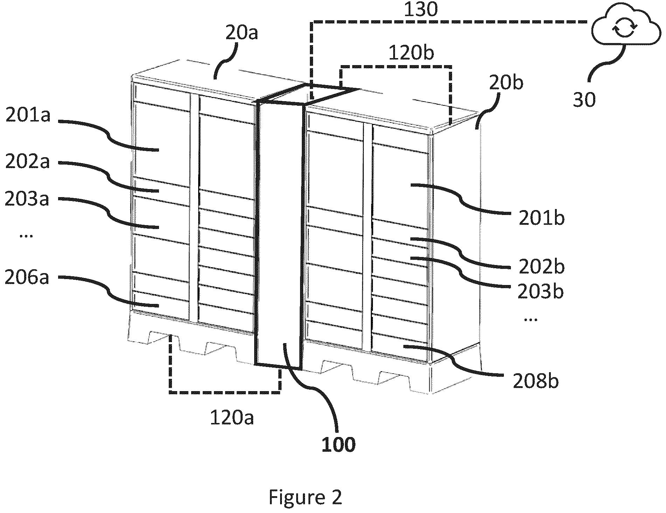

Figure 2 illustrates another example of auxiliary device 100 for wireless communication with a parcel locker device 20. The auxiliary device 100 is similar to the auxiliary device illustrated in Figure 1. For example, the auxiliary device 100 communicates wirelessly with a server 30 through a long-distance communication channel 130, as the one illustrated in Figure 1.

However, the auxiliary device 100 illustrated in Figure 2 is configured to communicate wirelessly with a parcel locker device, wherein the parcel locker device comprises two parcel lockers 20a and 20b. Each parcel locker 20a and 20b comprises a plurality of parcel locker compartments. As illustrated in Figure 2, parcel locker 20a comprises a plurality of parcel locker compartments, some of which are labelled 201a to 206a. Some parcel locker compartments have not been labelled for ease of illustration. Similarly, parcel locker 20b comprises a plurality of parcel locker compartments, some of which have been labelled 201b to 208b. Even in this case, some parcel locker compartments of parcel locker 20b have not been labelled for ease of illustration. Each parcel locker compartment is a recess, or cabinet within the respective parcel locker, in which parcels can be stored. Each parcel locker compartment comprises a door and a lock. Each parcel locker compartment comprises (not shown) a locker short-range antenna for wireless short-range communication with third parties, such as the auxiliary device, a user's mobile device or the server 30.

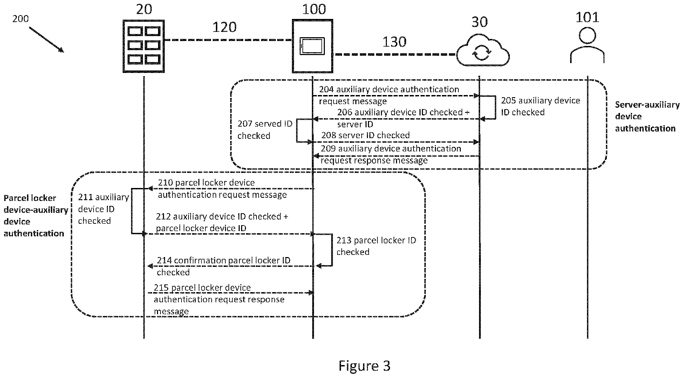

Figure 3 illustrates an example method 200 for establishing a wireless communication channel between an auxiliary device 100 and a parcel locker device 20. The system 10 which implements the method described below and illustrated in Figure 3 can be the same, or similar, to the system 10 illustrated in Figures 1 and 2.

Method 200 comprises two authentication steps: a first, server-auxiliary device authentication step, and a second, parcel locker device-auxiliary device authentication step. The server-auxiliary device authentication process is an authentication process in which the server 30 and the auxiliary device 100 identify each other. The parcel locker device-auxiliary device authentication process is an authentication process in which the parcel locker device 20 and the auxiliary device 100 identify each other. The server-auxiliary device authentication process and the parcel locker device-auxiliary device authentication step, together, form a double-authentication process which is implemented to establish safe, wireless communication channels between the auxiliary device 100 and the server 30 and between the auxiliary device 100 and the parcel locker device 20.

The server-auxiliary device authentication process comprises steps 204 to 209.

The first step of the server-auxiliary device authentication process is to transmit, from the auxiliary device 100 to the server 30, an auxiliary device authentication request message 204. The auxiliary device authentication request message 204 comprises a request to implement a server-auxiliary device authentication process. In this example, the request message 204 contains a digital identifier of the auxiliary device (auxiliary device ID), so that the server 30 can identify the auxiliary device 100 through said digital identifier.

In step 205, the server 30 processes the auxiliary device authentication request message 204 received by the auxiliary device 100. More specifically, the server 30 verifies that the auxiliary device 100 is a legitimate auxiliary device. For example, the server 30 may be able to compare the digital identifier sent within the auxiliary device authentication request message 204 with a plurality of digital identifiers previously stored in a list of approved digital identifiers. The list of approved digital identifiers may be shared, for example, with the server 30 by a delivery company owning the auxiliary devices and/or the parcel locker identifiers. In some examples, the digital identifier of the auxiliary device 100 is encrypted, and the server 30 is provided with an encryption key (not shown) to decrypt the digital identifier. Other parts of the auxiliary device authentication request message 204 may also be encrypted and used to verify that the auxiliary device 100 is legitimate.

In this step 205, the server 30 may further assess a security level of the long-range communication channel 130 between the auxiliary device 100 and the server 30. This may be done by assessing another component of the auxiliary device authentication request message 204.

After confirming, in step 205, that the auxiliary device 100 is legitimate, the server 30 transmits to the auxiliary device 100, a notification 206 that the auxiliary device identifier has been checked, and that the auxiliary identifier is legitimate and safe to communicate with. In step 206, the server 30 further sends a digital identifier of the server 30 (server ID).

In step 207, the auxiliary device 100 verifies the server ID and determines whether the server 30 is safe to communicate with. This process is similar to what described in step 205. When the server 30 has been successfully authenticated as legitimate, the auxiliary device 100 transmits to the server 30 a message 208 indicating that the server identifier has been checked and that the server 30 has been determined to be legitimate. At step 209, the auxiliary device receives from the server 30 an auxiliary device authentication request response message. The auxiliary device authentication request response message 209 comprises an indication that the server-auxiliary device authentication process has been successfully completed. In this example, the server-auxiliary device authentication is successful. In other words, an outcome of the server-auxiliary device authentication process is that the server 30 successfully identifies the auxiliary device 100, and the auxiliary device 100 successfully identifies the server 30. For example, the server 30 may successfully identify the auxiliary device 100 to be a legitimate auxiliary device 100, such as an auxiliary device 100 belonging to a reputable company. The same can occur from the perspective of the auxiliary device 100.

After completion of step 208, the server 30 and the auxiliary device 100 can therefore be paired, and the long-range communication channel 130 is determined to be safe to use for sharing information between the auxiliary device 100 and the server 30.

The second step of the double-authentication process comprises steps 210 to 215.

The second step of the double-authentication process cannot start unless the first step (204-209) is successful (i.e., the server 30 successfully identifies the auxiliary device 100 as a legitimate, safe device).

In step 210, the auxiliary device 100 transmits a parcel locker device authentication request message 210 to the parcel locker device 20. The parcel locker device authentication request message 210 comprises a request to implement a parcel locker-auxiliary device authentication process. This process is similar to the process implemented in steps 204 to 209. In this case, however, the auxiliary device 100 authenticates the identity of the parcel locker device 20, and the parcel locker device 20 authenticates the auxiliary device 100. In other words, the auxiliary device 100 verifies that the parcel locker device 20 is a legitimate parcel locker device, and vice versa. In step 211, the parcel locker device 20 authenticates the auxiliary device by analysing the digital identifier of the auxiliary device. In step 212, the parcel locker device 20 transmits, to the auxiliary device 100, a notification message that the auxiliary device identifier has been successfully verified. In this same step 212, the parcel locker device 20 further transmits an identifier of the parcel locker device 20 to the auxiliary device 100. In step 213, the auxiliary device 100 verifies the parcel locker device identifier transmitted in step 212. The auxiliary device 100 then transmits 214, to the parcel locker device 20, a confirmation that the parcel locker device identifier has been checked and that the parcel locker device is legitimate. Then, at step 215, the parcel locker device 20 transmits, to the auxiliary device 100, a parcel locker device authentication request response message. The parcel locker device authentication request response message comprises an indication that the parcel locker device-auxiliary device authentication process has been successfully completed. In other words, the parcel locker device 20 has successfully identified the auxiliary device 100 as legitimate and the auxiliary device 100 has successfully identified the parcel locker device 20 as legitimate.

After completion of step 215, the double authentication process is successfully completed. After completion of step 215, the auxiliary device 100 and the parcel locker device 20 can therefore be paired and the short-range communication channel 150 is determined to be safe to use for sharing information between the auxiliary device 100 and the parcel locker device 20.

A double authentication confirmation message indicating that the double authorisation process has been successfully completed may be transmitted from the parcel locker device 20 to the auxiliary device 100, or from the auxiliary device 100 to the server 30. This message may be displayed on a display of the user interface 102 of the auxiliary device 100, for a user 101 to read (not shown). For example, if the double-authentication process occurs during installation of the auxiliary device 100, the installer may be able to see a confirmation of successful authentication on the user interface 102. Alternatively, said message 214 is transmitted to a mobile application of a third party (e.g., the user 101) who installs the auxiliary device 100 or who intends to use the auxiliary device 100 to communicate and/or operate the parcel locker device 20. In some examples, the authorisation message 214 is transmitted to the server 30.

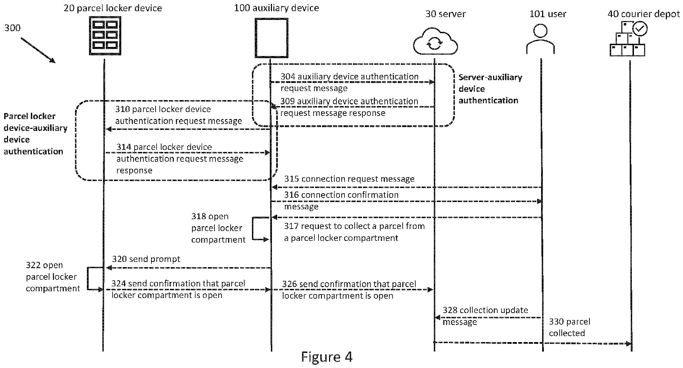

In Figure 4, a method for wireless communication between an auxiliary device 100 and a parcel locker device 20 is illustrated.

Steps 304 to 314 are similar to steps 204 to 214 previously described with regards to Figure 2.

Once step 314 is completed, and the double-authentication process has been successfully completed, the auxiliary device 100 has established a safe short-range communication channel 130 with the parcel locker device, and a safe long-range communication channel with the server 30.

At step 315, a user 101 submits a connection request to the auxiliary device 100. The connection request is submitted through the user interface 102 (not shown). Because the double-authentication process has been successfully completed, the auxiliary device 100 responds, at step 316, with a connection confirmation message, indicating a confirmation that the auxiliary device 100 is connected to the parcel locker device 20. After this, the user 101 transmits to the auxiliary device 100 a request to collect a parcel from a parcel locker compartment, at step 317. The request is within a message. The auxiliary device 100 then sends a prompt message 320, based on the request received at step 317.

The prompt message comprises a prompt for the parcel locker to implement the action of opening a specific parcel locker compartment. The prompt message 320 is sent to the parcel locker device 20 so that the parcel locker device 20 can implement the action of opening the specific parcel locker compartment as requested by the user 101. In some embodiments, the prompt message may comprise an encrypted indicator, the encrypted indicator indicating that the auxiliary device sending the prompt message 320 has been authenticated by the server. In some examples, the encrypted indicator may be sent to the server 30 before being sent to the parcel locker device, so that the server 30 can decrypt the encrypted indicator. If the server 30 fails to decrypt the indicator, this may mean that the prompt message is not being transmitted from a safe source. In some examples, this is repeated for every prompt message sent to the parcel locker device from the auxiliary device, to ensure that said prompt messages come from an authenticated (and therefore legitimate and safe) auxiliary device.

At step 322, the parcel locker device 20 opens the parcel locker compartment. At step 324, the parcel locker device 20 sends, to the auxiliary device 100, a confirmation message that the parcel locker compartment has been opened. At step 326, the auxiliary device 100 sends the confirmation message that the parcel locker has been opened to the server 30. After collecting the parcel, the user 101 forwards a collection update message 328 to the server 30. This step can occur after or before step 326. In this example, the collection update message contains an indication that the user 101 has collected the parcel. In other examples, the collection update message may contain an indication that the user has not found the parcel within the parcel locker compartment, or any other information related to the status of the parcel collection. At step 330, the courier depot 40 receives an update message that the parcel has been collected from the server 30. In this way, the server 30 can update the courier depot 40 regarding the state of the parcel delivery, and the courier depot 40 can decide whether further actions are needed or recommended.

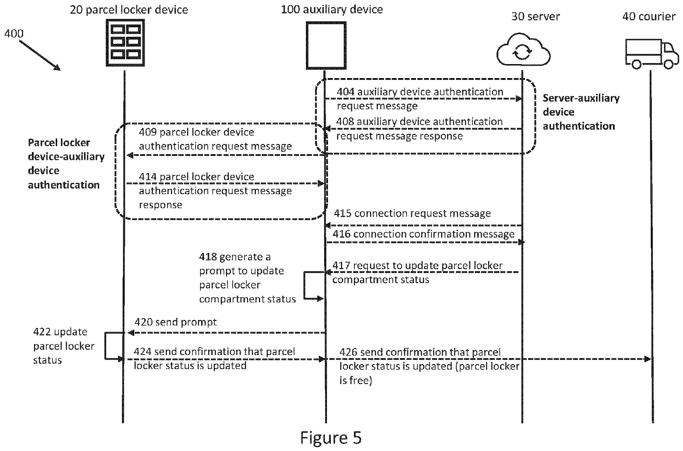

Figure 5 illustrates a method 400 for wireless communication between a parcel locker device 20 and an auxiliary device 100, where a server 30 requests the auxiliary device 100 to update the status of a parcel locker compartment. For example, a parcel locker compartment may have a "available" status, which indicates that the compartment is empty and ready to be used to store a parcel, or an "unavailable" status, indicating that the compartment is already storing a parcel and cannot therefore be used to store another parcel. The status may also be a "booked" status, indicating that the compartment is available but is already booked for delivery of a parcel and cannot therefore be booked for storing a further parcel. As previously illustrated for method 300, the steps 404 to 414 concern the double-authentication process, which has already been described in the paragraphs above. Only after a safe connection between the parties is established, can a server 30 send prompts to the auxiliary device 100. At step 415, the server 30 sends a connection request message, the connection request message indicating a request to connect the server 30 to the auxiliary device 100, through the long-range communication channel 150. At step 416, a confirmation that the connection request has been approved is sent from the auxiliary device 100 to the server 30. At step 417, the server 30 sends a request to update a parcel locker compartment status. This may be done, for example, in response to a user 101 collecting a parcel from the compartment, or in response to a courier delivering a parcel to the compartment. At step 418, the auxiliary device 100 generates a prompt to update a parcel locker compartment status (e.g., from "unavailable" to "available" or vice versa). At step 420, the auxiliary device 100 sends a prompt message to the parcel locker device 20, requesting the parcel locker device to implement the action of updating the parcel locker compartment status. At step 422, the parcel locker device 20 updates the parcel locker status, in response to the prompt message sent at step 420. At step 424, the parcel locker device 20 sends a confirmation to the auxiliary device 100 that the parcel locker status is updated. At step 426, the auxiliary device 100 sends the confirmation message indicating that the parcel locker status is updated to the courier 40. In some examples, the confirmation message is sent to the server 30. In some examples, the confirmation message 426 is sent to both the courier 40 and the server 30.

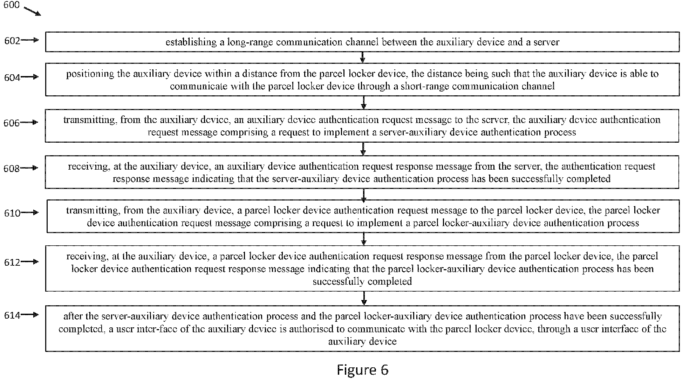

Figure 6 illustrates a block diagram showing a method 600 for establishing a wireless communication connection between an auxiliary device and a parcel locker device. The method comprises of the following steps. Step 602, establishing a long-range communication channel between the auxiliary device and a server. Step 604, positioning the auxiliary device within a distance from the parcel locker device, the distance being such that the auxiliary device is able to communicate with the parcel locker device through a short-range communication channel. Step 606, transmitting, from the auxiliary device, an auxiliary device authentication request message to the server, the auxiliary device authentication request message comprising a request to implement a server-auxiliary device authentication process. Step 608, receiving, at the auxiliary device, an auxiliary device authentication request response message from the server, the authentication request response message indicating that the server-auxiliary device authentication process has been successfully completed. Step 610, transmitting, from the auxiliary device, a parcel locker device authentication request message to the parcel locker device, the parcel locker device authentication request message comprising a request to implement a parcel locker-auxiliary device authentication process. Step 612, receiving, at the auxiliary device, a parcel locker device authentication request response message from the parcel locker device, the parcel locker device authentication request response message indicating that the parcel locker-auxiliary device authentication process has been successfully completed. Step 614, after the server-auxiliary device authentication process and the parcel locker-auxiliary device authentication process have been successfully completed, a user interface of the auxiliary device is authorised to communicate with the parcel locker device, through a user interface of the auxiliary device.

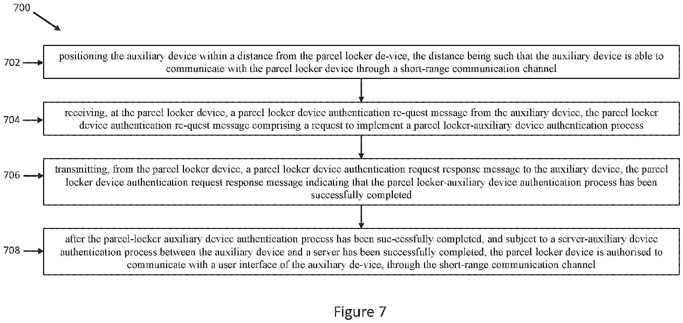

Figure 7 shows another method 700 for establishing a wireless communication connection between an auxiliary device and a parcel locker device. The method comprises of the following steps. Step 702, positioning the auxiliary device within a distance from the parcel locker device, the distance being such that the auxiliary device is able to communicate with the parcel locker device through a short-range communication channel. Step 704, receiving, at the parcel locker device, a parcel locker device authentication re-quest message from the auxiliary device, the parcel locker device authentication re-quest message comprising a request to implement a parcel locker-auxiliary device authentication process. Step 706, transmitting, from the parcel locker device, a parcel locker device authentication request response message to the auxiliary device, the parcel locker device authentication request response message indicating that the parcel locker-auxiliary device authentication process has been successfully completed. Step 708, after the parcel-locker auxiliary device authentication process has been successfully completed, and subject to a server-auxiliary device authentication process between the auxiliary device and a server has been successfully completed, the parcel locker device is authorised to communicate with a user interface of the auxiliary device, through the short-range communication channel.

Alternative embodiments and/or alternative features to the embodiments described in the paragraphs above and in the figures will be illustrated below.

According to some embodiments, the short-range communication module comprises a short-range communication antenna, which is configured to operate through a short-range communication protocol. Examples of communication protocols include (but are not limited to) Bluetooth, Zigbee, Bluetooth low-energy (BLE) or Near Field Communication (NFC) protocols.

According to some embodiments, the long-range communication module comprises a long-range communication antenna, which is configured to operate through a long-range communication protocol. Any commercially available and known long-range communication protocol may be suitable. In examples, the long-range communication channel may operate on a Wide Area Network (WAN), or a Local Area Network (LAN).

According to some embodiments, the auxiliary device may comprise a hardware unit. In some examples, the hardware unit of the auxiliary identifier may be provided with an auxiliary device hardware identifier in a computer-readable format, such as a digital format readable by a camera. The auxiliary device hardware identifier may be a unique identifier identifying the specific auxiliary device. Every auxiliary device may have its unique digital identifier. An example of digital format readable by a camera is a QR code. In some examples, the digital identifier of the auxiliary device is stored in an NFC (Near Field Communication) chip readable by an NFC reader. Any digital format which is commercially available and/or known in the field can be alternatively used. Similarly, the parcel locker device may be characterized by a hardware unit, which is provided with a parcel locker device hardware identifier in a computer readable format, such as what has been described in this paragraph.

In some examples, the double-authentication step may comprise steps to identify the location of a particular device. For example, the hardware of the auxiliary device may have a GPS (Global Positioning System) device which is configured to communicate the location of the auxiliary device through one or more of the short-range antenna and the long-range antenna. Information regarding the location of the auxiliary device may be comprised in the auxiliary device authentication request message, sent to the server.

The location of the auxiliary device may be sent together with the auxiliary device digital identifier. Similarly, the parcel locker device may comprise a similar GPS device, to indicate the location of the parcel locker device. **In** some examples, the parcel locker GPS location may be communicated within the parcel locker device authentication request message. **In** some alternative embodiments, the location of the parcel locker device and/or of the auxiliary device may be comprised in a message that is separate from the server authentication request message and/or from the parcel locker device authentication request message.

**In** some examples, the double-authentication process is executed upon installation of the auxiliary device in proximity to the parcel locker device. **In** some examples, the double authentication process as described herein will be executed periodically on a same auxiliary device, and not only during installation of the auxiliary device.

**In** some examples, the double-authentication process is executed upon installation of an auxiliary device in proximity to a plurality of parcel locker devices. This authentication process can be repeated for each of the plurality of parcel locker devices.

**In** some alternative examples, the double authentication process steps occur in a different order to what has been illustrated in Figure 3. For example, the server 30 (instead of the auxiliary device 100) may transmit the auxiliary device authentication request message to the auxiliary device 100, the auxiliary device authentication request message indicating a request to implement a server-auxiliary device authentication process. The auxiliary device may therefore be the device that sends the auxiliary device authentication request response message to the server 30. In some embodiments, the parcel locker device may be the device that sends the parcel locker device authentication request message to the auxiliary device, and the auxiliary device may therefore be the device that sends the parcel locker device authentication request response message.

A more detailed example of this alternative embodiment is described below.

The server 30 may transmit an auxiliary device authentication request message to the auxiliary device 100. The auxiliary device authentication request message may comprise a digital identifier of the server 30, similar to what has been described with respect to Figure 3. The auxiliary device authentication request message may comprise a request, from the server 30, to obtain a digital identifier of the auxiliary device 100. After checking the server digital identifier (through similar methods to what has been described with respect to Figure 3), the auxiliary device 100 may then transmit a message, to the server 30, to confirm that the server digital identifier has been checked, and that the server is considered to be legitimate. Said message may comprise a digital identifier of the auxiliary device 100, for the server 30 to check. The server 30 may then authenticate the auxiliary device digital identifier and send a response message, to the auxiliary device 100, confirming that the auxiliary device 100 is legitimate. Finally, the auxiliary device transmits an auxiliary device authentication request response message to the server 30, the auxiliary device authentication request response message indicating that the server-auxiliary device authentication process has been successfully completed. The second authentication step, between the parcel locker device 20 and the auxiliary device may occur in a similar manner.

In some examples, the digital identifier of the respective devices (e.g., the server) are exchanged between the different parties in a different order to what has been described in Figure 3. An alternative order of steps is the following: transmitting, from the auxiliary device 100 to the server 30, an auxiliary device digital identifier message including a digital identifier of the auxiliary device; receiving, at the auxiliary device 100 from the server 30, a server digital identifier message including a digital identifier of the server 30; transmitting, at the auxiliary device, an auxiliary device authentication request message comprising a request to implement/execute a server-auxiliary device authentication process; verifying, at the auxiliary device 100, the digital identifier of the server 30, whilst the server 30 verifies the digital identifier of the auxiliary device 100; receive, at the auxiliary device 100, a confirmation message from the server 30, the confirmation message indicating that the server 30 has successfully identifier the auxiliary device 100 to be a legitimate device, whilst the auxiliary device sends to the server a similar confirmation message, indicating that the auxiliary device has successfully identified the server 30 as legitimate; receiving, at the auxiliary device, an auxiliary device authentication request response message, the auxiliary device authentication request response message indicating that the server-auxiliary device authentication process has been successfully completed. Similar steps can be taken for the parcel locker device-auxiliary device authentication process.

The server-auxiliary device authentication process can be implemented through a handshake message protocol. For example, a handshake message protocol can be used to exchange simultaneously the digital identifiers of the server and of the auxiliary device between the server and the auxiliary device.

According to some embodiments, the server-auxiliary device authentication process is used to verify the identity of the auxiliary device only, and not of the server. In these examples, a digital identifier of the server may not be necessary. According to some embodiments, the server-auxiliary device authentication process is used to verify the identity of the server only, and not of the auxiliary device. In these examples, a digital identifier of the auxiliary device may not be necessary. According to some embodiments, the parcel locker device-auxiliary device authentication process is used to verify the identity of the auxiliary device only, and not of the parcel locker device. In these examples, a digital identifier of the parcel locker device may not be necessary. According to some embodiments, the parcel locker device-auxiliary device authentication process is used to verify the identity of the parcel locker device only, and not of the auxiliary device. In these examples, a digital identifier of the auxiliary device may not be necessary.

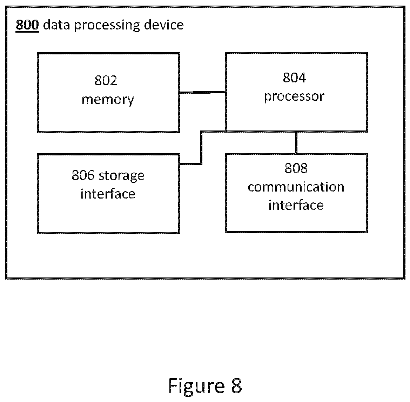

It will be apparent to a person skilled in the art that the methods described herein are all suitable for implementation by a data processing device. By way of example, Fig. 8 shows in schematic form a data processing device 800 that is suitable for performing the functions of auxiliary device 100, server 30 and/or parcel locker device 20. The data processing device 800 may also be suitable for performing the functions of any device (or hardware component) comprised within any of the auxiliary device 100, the server 30 and/or the parcel locker device 20.

Data processing device 800 includes a processor 804 for executing instructions. Instructions may be stored in a memory 802, for example. Processor 804 may include one or more processing units (e.g., in a multi-core configuration) for executing instructions. The instructions may be executed within a variety of different operating systems on the data processing device 800, such as UNIX, LINUX, Microsoft Windows^{®} , etc. More specifically, the instructions may cause various data manipulations on data stored in memory 802 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 804 is operatively coupled to a communication interface 808, such that the data processing device 800 is capable of communicating with a remote device, such as another data processing device of the system 10.

Processor 804 may also be operatively coupled to a storage device such as storage medium via storage interface 806. The storage device is any computer-operated hardware suitable for storing and/or retrieving data. In some cases, e.g. a remotely located storage medium, communication interface 808 may perform the function of storage interface 806 such that these two entities are combined.

The storage medium can be integrated in data processing device 800, or it can be external to data processing device 800 and located remotely. For example, data processing device 800 may include one or more hard disk drives as a storage device. Alternatively, where the storage device is external to data processing device 800, it can comprise multiple storage units such as hard disks or solid state disks in a redundant array of inexpensive disks (RAID) configuration. The storage device may include a storage area network (SAN) and/or a network attached storage (NAS) system.

Processor 804 can be operatively coupled to the storage device via a storage interface 806. Storage interface 806 is any component capable of providing processor 804 with access to the storage device. Storage interface 806 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 804 with access to the storage device.

Memory 802 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

It should be appreciated that those skilled in the art will be able to devise numerous systems and processes which, although not explicitly shown or described herein, embody the principles of the invention, and are thus within the spirit and scope of the present invention.

## Claims

1. A method for establishing a wireless communication connection between an auxiliary device and a parcel locker device, wherein the method comprises the steps of:
establishing a long-range communication channel between the auxiliary device and a server,
positioning the auxiliary device within a distance from the parcel locker device, the distance being such that the auxiliary device is able to communicate with the parcel locker device through a short-range communication channel,
transmitting, from the auxiliary device, an auxiliary device authentication request message to the server, the auxiliary device authentication request message comprising a request to implement a server-auxiliary device authentication process,
receiving, at the auxiliary device, an auxiliary device authentication request response message from the server, the auxiliary device authentication request response message indicating that the server-auxiliary device authentication process has been successfully completed,
transmitting, from the auxiliary device, a parcel locker device authentication request message to the parcel locker device, the parcel locker device authentication request message comprising a request to implement a parcel locker-auxiliary device authentication process,
receiving, at the auxiliary device, a parcel locker device authentication request response message from the parcel locker device, the parcel locker device authentication request response message indicating that the parcel locker-auxiliary device authentication process has been successfully completed, and wherein
after the server-auxiliary device authentication process and the parcel locker-auxiliary device authentication process have been successfully completed, a user interface of the auxiliary device is authorised to communicate with the parcel locker device, through a user interface of the auxiliary device.

2. The method of claim 1, the method further comprising the steps of:
receiving, at the auxiliary device, a request from a third party.
generating, at a processor of the auxiliary device, a prompt message based on the received request, the prompt message comprising a prompt for the parcel locker device to implement an action,
transmitting, from the auxiliary device, through the short-range communication channel, the prompt message to the parcel locker device, such that the parcel locker device executes the action.

3. The method of claim 2, the method further comprising the step of:
receiving, at the auxiliary device, an action update message from the parcel locker device, wherein the action update message comprises an indication that the parcel locker device has executed the action,
transmitting, from the auxiliary device, the action update message to the third party.

4. The method of claim 2 or 3, wherein the third party is a user, wherein the request is received at the user interface, and wherein the action update message is transmitted to the user through the user interface.

5. The method of claim 2 or 3, wherein the third party is the server, and wherein the action update message is transmitted to the server through the long-range communication channel.

6. An auxiliary device configured to be paired with a parcel locker device through a wireless connection, the auxiliary device comprising:
a user interface configured to interact with a user,
a processor,
a short-range communication module comprising a short-range antenna for communication with the parcel locker device,
a long-range communication module comprising a long-range communication antenna, for communication with a server.

7. The auxiliary device of any preceding claim, further comprising a battery unit.

8. The auxiliary device of claim 7, wherein the battery unit is a replaceable battery unit.

9. The auxiliary device of any preceding claim, wherein the user interface comprises a Point of Sale POS device, such as a PIN pad.

10. A parcel delivery system for distribution of parcels, the system comprising:
an auxiliary device according to any of claims 6 to 9,
a parcel locker device, wherein the parcel locker device comprises one or more parcel lockers, each parcel locker comprising:
one or more locker compartments, wherein each of the one or more locker compartments comprises a door and a lock unit, such that access to each of the one or more locker compartments is controlled via the respective door and lock unit,
a locker short-range communication module configured to communicate with the auxiliary device through a wireless communication protocol.

11. A method for establishing a wireless communication connection between an auxiliary device and a parcel locker device, wherein the method comprises the steps of:
positioning the auxiliary device within a distance from the parcel locker device, the distance being such that the auxiliary device is able to communicate with the parcel locker device through a short-range communication channel,
receiving, at the parcel locker device, a parcel locker device authentication request message from the auxiliary device, the parcel locker device authentication request message comprising a request to implement a parcel locker-auxiliary device authentication process,
transmitting, from the parcel locker device, a parcel locker device authentication request response message to the auxiliary device, the parcel locker device authentication request response message indicating that the parcel locker-auxiliary device authentication process has been successfully completed, and wherein
after the parcel-locker auxiliary device authentication process has been successfully completed, and subject to a long-range communication channel being established between a server and the auxiliary device and subject to a server-auxiliary device authentication process between the auxiliary device and a server being successfully completed, the parcel locker device is then authorised to communicate with a user interface of the auxiliary device, through the short-range communication channel.

12. A method for establishing a wireless communication connection between an auxiliary device and a parcel locker device, wherein the method comprises the steps of:
establishing, a long-range communication channel between the auxiliary device and a server,
receiving, at a server, an auxiliary device authentication request message from the server, the auxiliary device authentication request message comprising a request to implement a server-auxiliary device authentication process,
transmitting, from the server, an auxiliary device authentication request response message to the auxiliary device, the authentication request response message indicating that the server-auxiliary device authentication process has been successfully completed, and wherein
after the server-auxiliary device authentication process has been successfully completed, and subject to a short-range communication channel being established between the auxiliary device and the parcel locker device, and subject to a parcel locker device-auxiliary device authentication process being successfully completed, the parcel locker device is then authorised to communicate with a user interface of the auxiliary device through the short-range communication channel.

13. A method for establishing a wireless communication connection between an auxiliary device and a parcel locker device, wherein the method comprises the steps of
establishing a long-range communication channel between the auxiliary device and a server,
positioning the auxiliary device within a distance from the parcel locker device, the distance being such that the auxiliary device is able to communicate with the parcel locker device through a short-range communication channel,
receiving, at the auxiliary device, an auxiliary device authentication request message from the server, the auxiliary device authentication request message comprising a request to implement a server-auxiliary device authentication process,
transmitting, from the auxiliary device, an auxiliary device authentication request response message to the server, the auxiliary device authentication request response message indicating that the server-auxiliary device authentication process has been successfully completed,
transmitting, from the auxiliary device, a parcel locker device authentication request message to the parcel locker device, the parcel locker device authentication request message comprising a request to implement a parcel locker-auxiliary device authentication process,
receiving, at the auxiliary device, a parcel locker device authentication request response message from the parcel locker device, the parcel locker device authentication request response message indicating that the parcel locker-auxiliary device authentication process has been successfully completed, and wherein
after the server-auxiliary device authentication process and the parcel locker-auxiliary device authentication process have been successfully completed, a user interface of the auxiliary device is authorised to communicate with the parcel locker device, through a user interface of the auxiliary device.
